# EUROPEAN PATENT APPLICATION

(11) **EP 1 043 842 A1**
(43) Date of publication of application: **11.10.2000**
(21) Application number: 99938571.9
(22) Date of filing: 23.08.1999
(51) Int. Cl.: H04B 1/16, H04N 7/08

(54) **STORAGE-TYPE DATA RECEIVER**

(30) Priority: 31.08.1998 JP 24486498
(71) Applicant: Matsushita Electric Industrial Co., Ltd., Kadoma-shi, Osaka-fu, 571-8501 (JP)
(72) Inventor: HENMI, Hidemi, Otsu-shi, Shiga 520-2132 (JP)
(74) Representative: Lang, Johannes, Dipl.-Ing.
(86) International application number: JP9904510
(87) International publication number: WO0013326

(57) **Abstract**

A storage-type data receiver (Arp1) for receiving data (Dd) being updated at irregular intervals and next-update information (Inu) indicating when the data (Dd) is to be updated next (T(Inu)), both distributed by a specific data source (1,3,5) to store the data therein, the receiver comprising: a receiver (1,3,5) receiving the distributed data (Dd) and the next-update information (Inu);
a storage (13) storing the received data (Dd); a next-update information recorder (9) recording the received next-update information (Inu); a clock (15) indicating the current time (T(Ict)), a data update detector (11) generating a data update indication signal (Sj) which indicates whether it is the time to update the data (Dd) by comparing the current time (T(Ict)) and the next-update time (T(Inu)); and a data storage controller (17) controlling the storage of the received data (Dd) in the storage (13) based on the data update indication signal (Sj).

## Description

### TECHNICAL FIELD

The present invention relates to a storage-type data receiver used for broadcast-type data distribution service such as text broadcasting or data broadcasting, and communication-type data distribution service such as the Internet, and more specifically, relates to a recording medium on which a data reception processing program is recorded for realizing, exemplarily on a computer, a data reception method and a stored data update method carried out in the storage-type data receiver.

### BACKGROUND ART

Recently, broadcast-type data distribution service such as text broadcasting or data broadcasting for distributing data by means of broadcast signals has started. Communication-type data distribution service for distributing data through a network such as the Internet has been also introduced. Accordingly, a variety of data receivers have appeared on the market, which are of a type receiving data distributed through such data distribution services and then storing the received data for later use.

In the broadcast-type data distribution service, for example, information including program title, broadcast time, broadcasting station, and the cast is inserted between conventional television broadcast waves in analog (VBI in Vertical Blanking Interval) or directly into satellite broadcast waves in digital as EPG (Electric Program Guide) data.

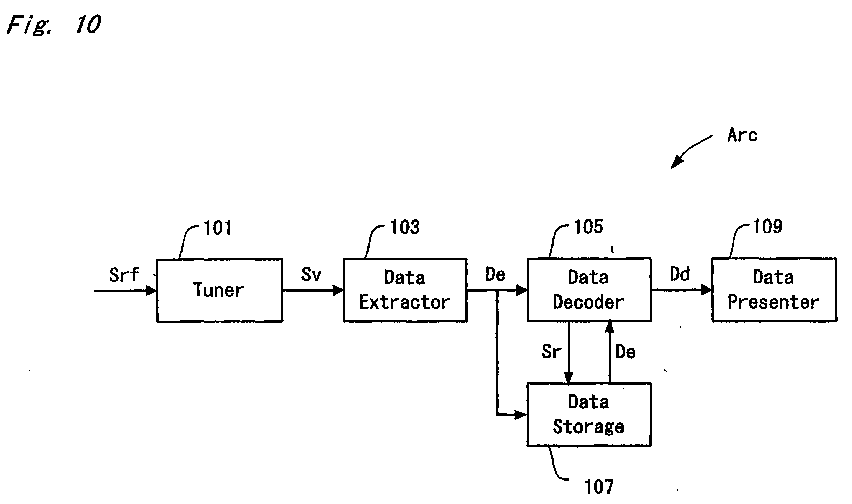

FIG. 10 shows the structure of a conventional storage-type data receiver used for broadcast-type data distribution service. A conventional storage-type data receiver Arc is provided with a tuner 101, a data extractor 103, a data decoder 105, a data storage 107, and a data presenter 109.

In the tuner 101, broadcast wave Srf received by an antenna (not shown) is downconverted and demodulated, for generation of a video signal Sv, in accordance with a frequency band of a user selected broadcast channel.

The data extractor 103 extracts given data De included in the video signal Sv provided by the tuner 101.

The data storage 107 stores the data De provided by the data extractor 103. The data storage 107 also outputs the stored data De to the data decoder 105 in response to a read request signal Sr to be provided therefrom.

The data decoder 105 decodes the data De provided by the data extractor 103 or the data storage 107, and generates decoded data Dd.

The data presenter 109 is structured by a display device such as display, and presents the details of the decoded data Dd provided by the data decoder 105.

In such conventional data receiver Arc, however, it is uncertain when distribution data is updated. Therefore, whenever data comes, the data has to be written to the data storage 107. To be specific, even if the newly-provided data is identical to the one already in the data storage 107, the data already in the data storage 107 is overwritten with the data which is newly-provided but identical thereto.

When the data storage 107 is structured by a device being susceptible to deterioration from frequency of data writing thereto such as hard disk or nonvolatile memory, the same data is repeatedly written thereto more often than necessary to keep the data therein the latest. Thus, the life cycle of the data storage 107 gets shorter due to such unnecessary repeated writing.

In addition, as it is uncertain when the data is updated, the tuner 101 has to be left on an applicable channel.

Further, to keep desired data up-to-date, power has to always be supplied to all of the tuner 101, the data extractor 103, the data decoder 105, the data storage 107, and the data presenter 109 for bringing the data receiver Arc into operation.

A first object of the present invention is to provide a storage-type data receiver and a storage-type data reception method capable of cutting down, to a minimum, the frequency of data writing necessary to keep the storage data the latest, and a recording medium on which a storage-type data reception processing program is recorded.

A second object of the present invention is to provide a storage-type data receiver and a storage-type data reception method capable of keeping data in storage the latest while cutting down, to a minimum, the frequency of data writing without constantly setting the tuner to an applicable channel, and a recording medium on which a storage-type data reception processing program is recorded.

A third object of the present invention is to provide a storage-type data receiver and a storage-type data reception method capable of keeping data in storage the latest while cutting down, to a minimum, the frequency of data writing without constantly supplying power to constituents necessary to receive data, and a recording medium on which a storage-type data reception processing program is recorded.

### DISCLOSURE OF THE INVENTION

The present invention has the following features to attain the objects above.

A first aspect of the present invention is directed to a storage-type data receiver of a type receiving data distributed from a data source and updated at irregular intervals, and next-update information indicating when the data is to be next updated, and storing the data, the receiver comprises:
a receiving device for receiving the data and next-update information;
a storage for storing the data;
a data update detector for generating, after comparing current time and next-update time indicated by the next-update information, a data update time indication signal which indicates whether or not now is the time to update the data; and
a data storage controller for controlling storage of the data in the storage according to the data update indication signal.

As described in the foregoing, in the first aspect, storage of data can be done only when data in storage is updated.

According to a second aspect, in the first aspect, the storage is controlled to store the received data when the current time coincides with the next-update information.

As described in the foregoing, in the second aspect, storage of data is done only when data in storage is updated. Therefore, the data already in storage can be prevented from being overwritten with the same data.

According to a third aspect, in the first aspect, the receiving device comprises:
a tuner for arbitrarily selecting a broadcast channel signal selected from a plurality of broadcast channel signals; and
a tuner controller for controlling channel tuning of the tuner according to the data update time indication signal.

According to a fourth aspect, in the third aspect, the tuner controller controls the tuner in such a manner as to tune itself with the arbitrarily selected channel when the current time coincides with the next-update information.

As described in the foregoing, in the fourth aspect, another data can be received when the data in storage is not overwritten with new data.

According to a fifth aspect, in the first aspect, further comprising a power supply controller for controlling power supply to the receiving device according to the data update indication signal.

According to a sixth aspect, in the fifth aspect, the power supply controller supplies power to the receiving device only when the current time coincides with the next-update information.

As described in the foregoing, in the sixth aspect, the power supply to the receiver is stopped when the data in storage is not overwritten with new data, thereby preventing unnecessary power consumption.

According to a seventh aspect, in the fifth aspect, the power supply controller) supplies power to the data update detector regardless of the data update indication signal.

As described in the foregoing, in the seventh aspect, data stored can be overwritten with new data with a minimum power consumption.

According to an eighth aspect, in the third aspect, a storage data identification information device for generating identification information for specifying data to be stored,
according to the identification information, the tuner controller tunes the channel of the tuner to a broadcast channel through which the stored data is distributed.

As described in the foregoing, in the eighth aspect, data distributed from a plurality of data sources can be arbitrarily selected and stored.

According to a ninth aspect, in the eighth aspect, further comprising specified data extractor for extracting the specified data to be stored from the received data in accordance with the identification information.

A tenth aspect of the present invention is directed to a storage-type data reception method of receiving data distributed from a data source and updated at irregular intervals, and next-update information indicating when the data is to be next updated, and storing the data, the method comprises:
a reception step of receiving the data and next-update information;
a storage step of storing the data;
an update time determination step of determining whether or not now is the time to update the data after comparing current time and next-update time indicated by the next-update information; and
a data storage control step of effectuating the storage step according to the determination made in the update time determination step.

According to an eleventh aspect, in the tenth aspect, in the data storage control step, the storage step is effectuated only when the current time coincides with the next-update information.

According to a twelfth aspect, in the tenth aspect, the reception step further comprises:
a tuning step of arbitrarily selecting a broadcast channel signal selected from a plurality of broadcast channel signals; and
a tuning control step of effectuating the tuning step only when the current time coincides with the next-update information.

According to a thirteenth aspect, in the tenth aspect, a computer program capable of activating a computer in such a manner that a device structured by the computer program and the computer can carry out the storage-type data reception method as claimed in claim 10.

According to a fourteenth aspect, in the tenth aspect, a computer program capable of causing a computer to carry out the storage-type data reception method as claimed in claim 10 when the product is run thereon.

According to a fifteenth aspect, in the tenth aspect, a computer program product stored on a medium readable by a computer, which comprises computer code means capable of carrying out the storage-type data reception method as claimed in claim 10 when the product is run thereon.

### BRIEF DESCRIPTION OF THE DRAWINGS

FIG. 1 is a block diagram showing the structure of a data receiver according to a first embodiment of the present invention.
FIG. 2 is a block diagram exemplarily showing the detailed structure of an in-data processing controller 40 shown in FIG. 1.
FIG. 3 is a flowchart showing the operation of the data receiver shown in FIG. 1 is operated.
FIG. 4 is a block diagram showing the structure of a data receiver according to a second embodiment of the present invention.
FIG. 5 is a flowchart showing the operation of the data receiver shown in FIG. 4 is operated.
FIG. 6 is a block diagram showing the structure of a data receiver according to a third embodiment of the present invention.
FIG. 7 is a flowchart showing the operation of the data receiver shown in FIG. 6 is operated.
FIG. 8 is a block diagram showing the structure of a data receiver according to a fourth embodiment of the present invention.
FIG. 9 is a flowchart showing the operation of the data receiver shown in FIG. 8 is operated.
FIG. 10 is a block diagram showing the structure of a conventional data receiver.

### BEST MODE FOR CARRYING OUT THE INVENTION

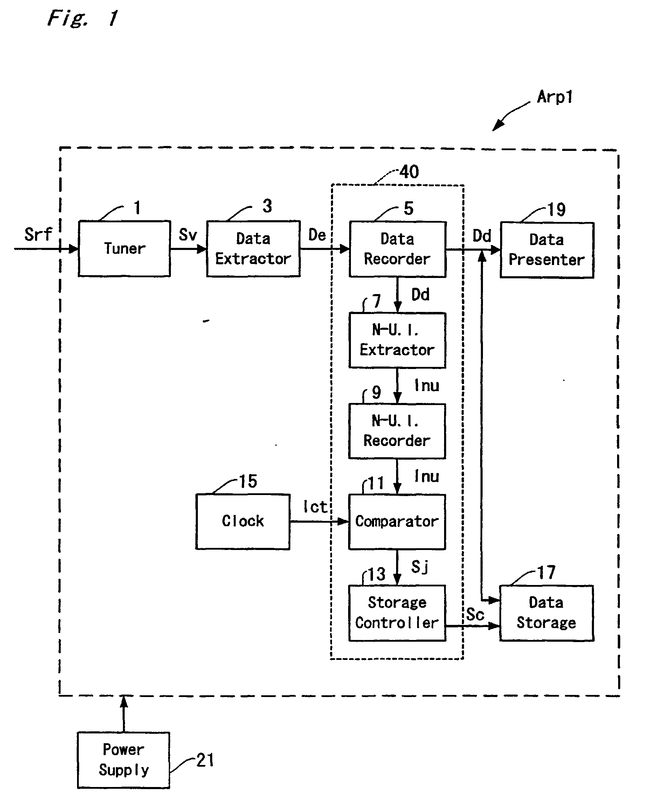

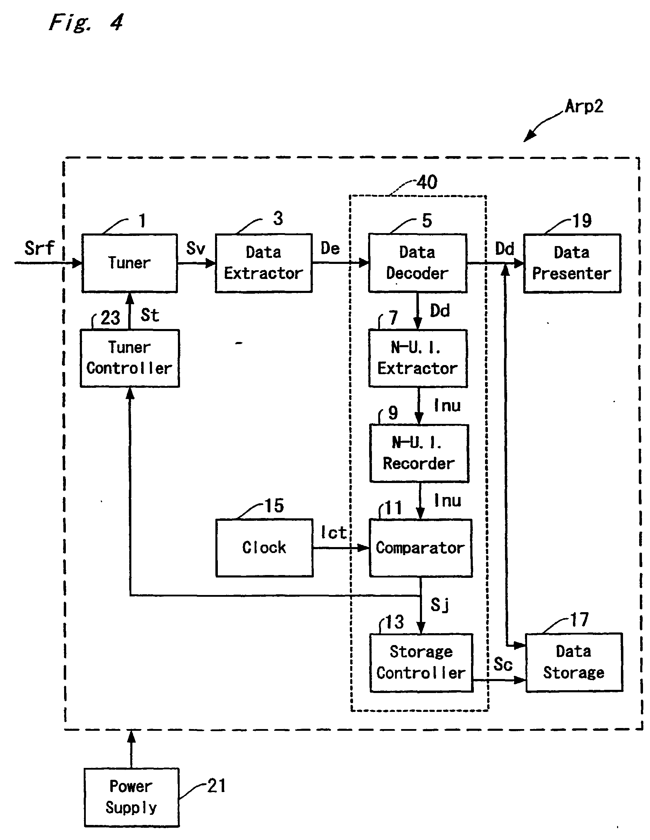

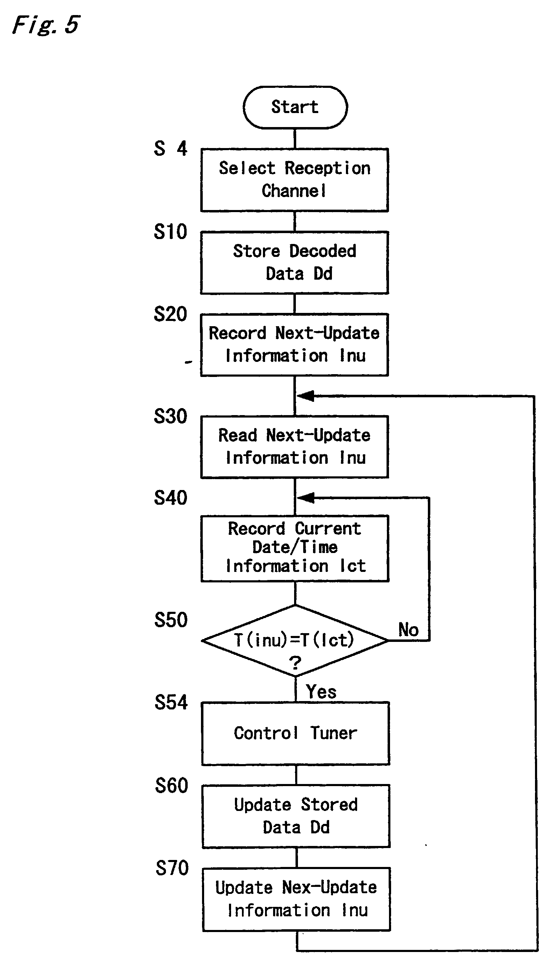

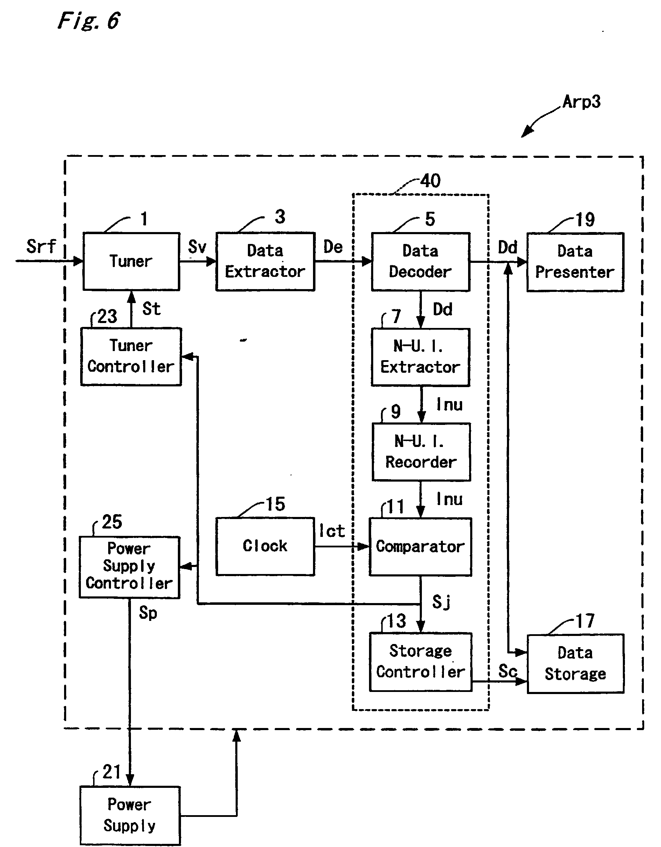

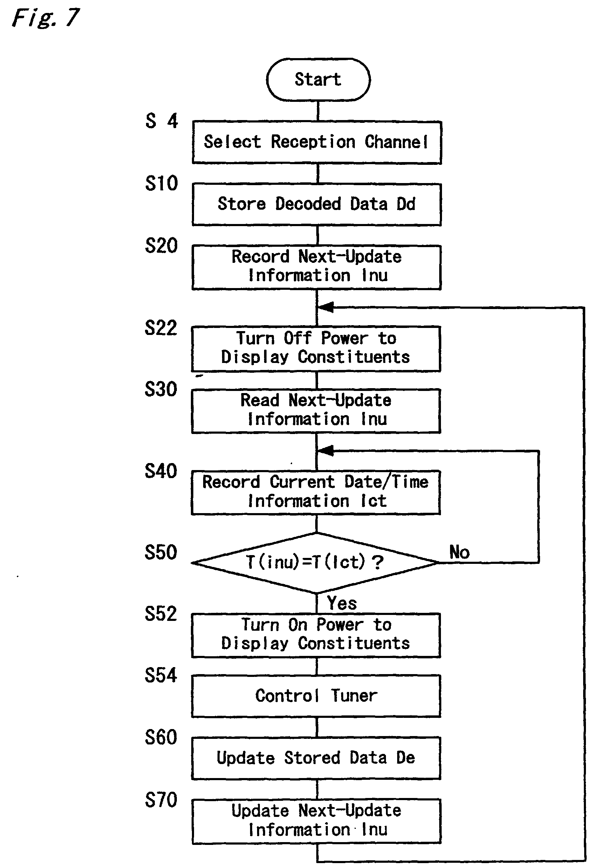

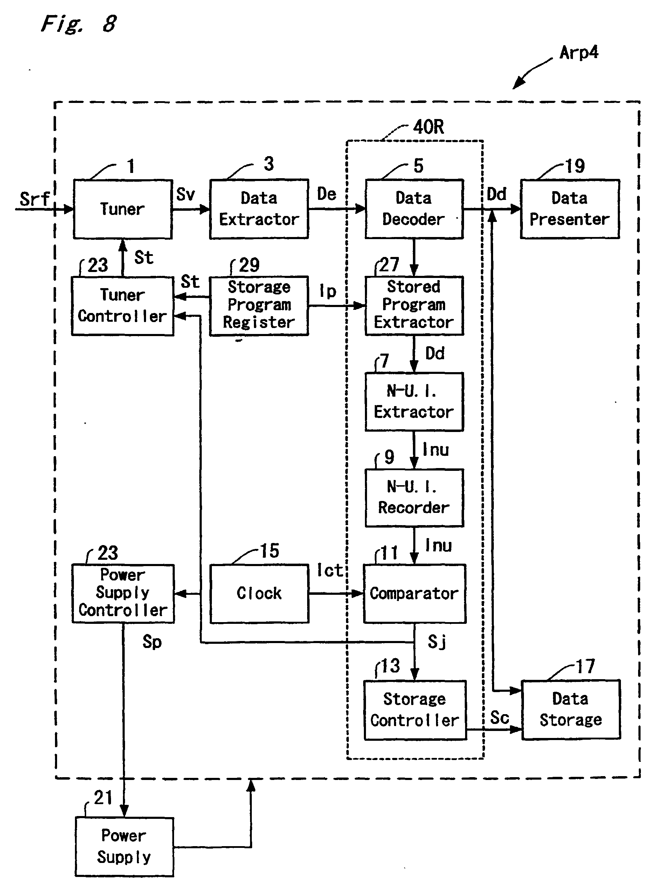

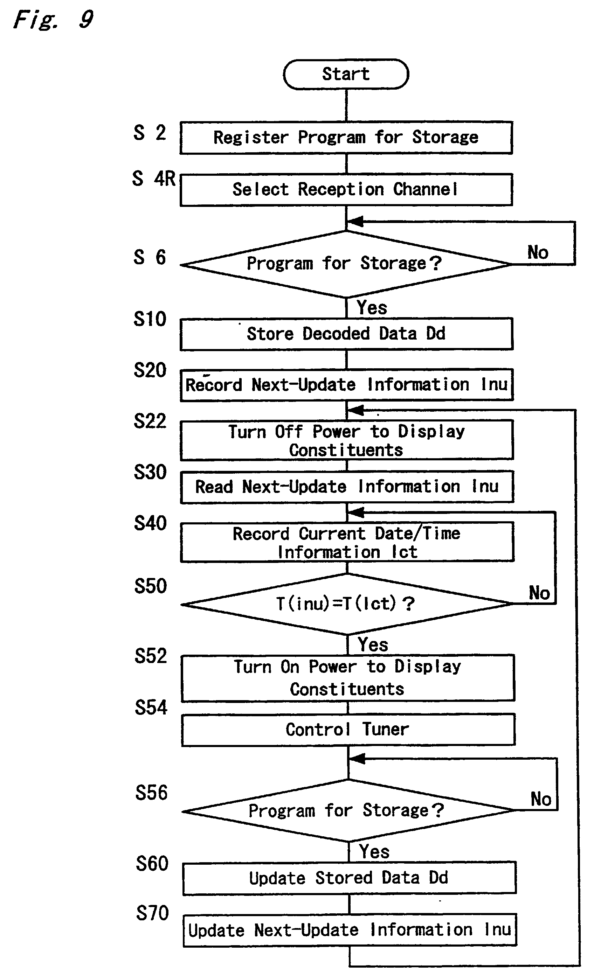

To describe the present invention in detail, the description is made with reference to the accompanying drawings. Next below, a storage-type data receiver according to a first embodiment of the present invention is described in detail with reference to FIG. 1, FIG. 2, and FIG. 3, a storage-type data receiver according to a second embodiment with reference to FIG. 4 and FIG. 5, a storage-type data receiver according to a third embodiment with reference to FIG. 6 and FIG. 7, and a storage-type data receiver according to a fourth embodiment with reference to FIG. 8 and FIG. 9.

### (First Embodiment)

First, by referring to FIG. 1, the structure of the storage-type data receiver according to the first embodiment of the present invention is described. Herein, this embodiment is suitable for an environment where data to be stored is distributed from a single data source at a given time.

A storage-type data receiver Arp1 of this embodiment is provided with a tuner 1, a data extractor 3, a date decoder 5, a next-update information extractor 7, a next-update information recorder 9, a comparator 11, a storage controller 13, a clock 15, a data storage 17, a data presenter 19, and a power supply 21.

In the tuner 1, a broadcast wave Srf received by an antenna (not shown) is demodulated, for generation of a video signal Sv, in accordance with a frequency band of a user selected broadcast channel.

The data extractor 3 extracts data De included in the video signal Sv provided by the tuner 1.

The data decoder 5 decodes (interprets) the data De provided by the data extractor 3 so as to output decoded data Dd.

The data presenter 19 is exemplarily structured by an indicator such as display device or a printing device such as printer, and presents the details of the decoded data Dd provided by the data decoder 5.

The next-update information extractor 7 extracts and outputs, from the decoded data Dd provided by the data decoder 5, next-update information Inu indicating when the decoded data Dd is to be updated next.

The next-update information recorder 9 records the next-update information Inu provided by the next-update information extractor 7.

The clock 15 outputs current date/time information Ict indicating the current date/time.

The comparator 11 compares the current date/time information Ict provided by the clock 15 with the next-update information Inu recorded in the next-update information recorder 9, and outputs a determination signal Sj indicating the comparison result.

The data storage 17 is exemplarily structured by a recording medium such as hard disk or nonvolatile memory, and stores the decoded data Dd provided by the data decoder 5.

The storage controller 13 generates, in accordance with the determination signal Sj provided by the comparator 11, a storage control signal Sc which controls the data storage and read operation of the data storage 17, and the signal Sc therefrom. In detail, in accordance with the storage control signal Sc, the storage controller 13 stores the decoded data Dd provided by the data decoder 5, and also reads the stored decoded data Dd out to the data presenter 19.

The power supply 21 is a device supplying power to each constituent of the storage-type data receiver Arp1. The user turns on/off the power supply 21 so as to start/stop the storage-type data receiver Arp1.

In this embodiment, the tuner 1, the data extractor 5, and the data decoder 5 construct the source of data to be stored;
the next-update information extractor 7, the clock 15, and the comparator 11 are for detecting the update timing of the data to be stored; and
the storage controller 13 and the data storage 17 are for storing and reading the data.

In this embodiment, the data decoder 5, the next-update information extractor 7, the next-update information recorder 9, the comparator 11, and the storage controller 13 are all the constituents of an in-data processing controller 40. The in-data processing controller 40 is preferably realized by software.

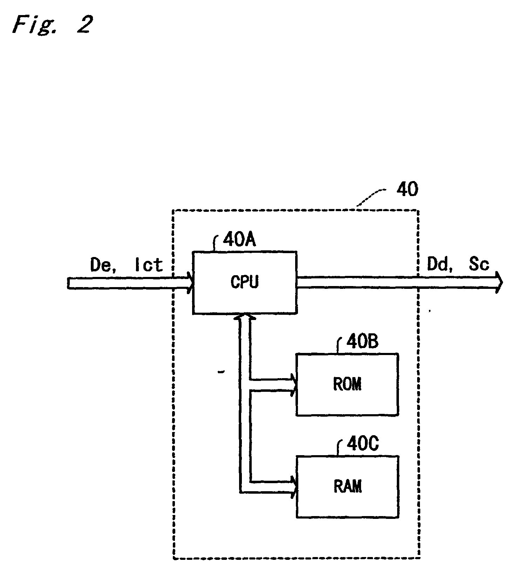

FIG. 2 shows the exemplary detailed hardware structure of the aforementioned in-data processing controller 40. The in-data processing controller 40 is provided with a CPU 40A, a ROM 40B, and a RAM 40C. The ROM 40B contains a data reception processing program which controls the comprehensive operation of the in-data processing controller 40. The CPU 40A runs the data processing program contained in the ROM 40B on the RAM 40C. Thereby the data decoder 5, the next-update information extractor 7, the next-update information recorder 9, the comparator 11, and the storage controller 13, all of which are the constituents of the in-data processing controller 40, are each put to function.

To be specific, the CPU 40A runs the data reception processing program contained in the ROM 40B according to the data De and the current date/time information Ict respectively provided by the data extractor 3 and the clock 15, and generates the decoded data Dd and the storage control signal Sc.

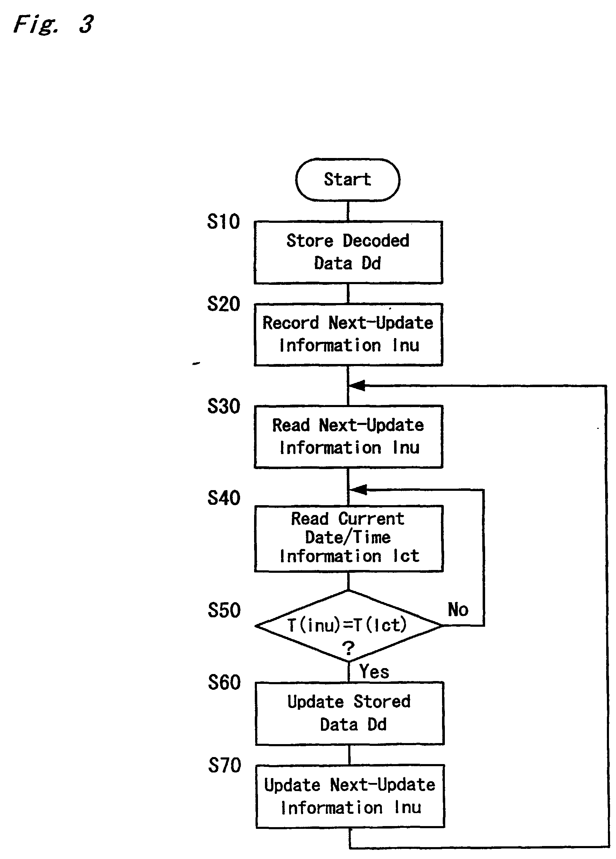

Next, by referring to the flowchart shown in FIG. 3, it is described how the aforementioned in-data processing controller 40 in the storage-type data receiver Arp1 is operated.

Once the storage-type data receiver Arp1 is started, first in the tuner 1, a broadcast signal in a user predesignated channel frequency band is selected out of the broadcast wave Srf received by the antenna, and then the video signal Sv included therein is outputted to the data extractor 3. The data extractor 3 extracts the data De from the video signal Sv. The data decoder 5 decodes the data De to generate the decoded data Dd. The data decoder 5 outputs the generated decoded data Dd to both the next-update information extractor 7 and the data presenter 19. The data presenter 19 presents the details of the decoded data Dd.

On the other hand, the following processing is carried out on the basis of the decoded data Dd provided to the next-update information extractor 7.

First, in step S10, the storage controller 13 generates the storage control signal Sc, and then causes the data storage 17 to store the decoded data Dd provided by the data decoder 5. Thereafter, the procedure goes to the next step S20.

In step S20, the next-update information extractor 7 extracts the next-update information Inu from the decoded data Dd provided by the data decoder 5. The extracted next-update information Inu is recorded in the next-update information recorder 9. Thereafter, the procedure goes to the next step S30.

In step S30, the comparator 11 reads the next-update information Inu recorded in the next-update information recorder 9. Thereafter, the procedure goes to the next step S40.

In step S40, the comparator 11 reads the current date/time information Ict from the clock 15. Thereafter, the procedure goes to the next step S50.

In step S50, it is determined whether or not the current time T (ict) indicated by the current date/time information Ict read in step S40 and the update time T (inu) indicated by the next-update information Inu read in step S30 coincide with each other.

When the current time T (ict) does not coincide with the next-update time (inu), the determination is No, and then the processing in this step is repeated. Then, when the current time T (ict) coincides with the next-update time (inu), the determination becomes Yes and the procedure goes to the next step S60.

In step S60, the storage controller 13 generates the storage control signal Sc, and controls the data storage 17 so as to store the decoded data Dd provided by the data decoder 5. In detail, the decoded data Dd already recorded in the data storage 17 is updated by another decoded data Dd newly-provided by the data decoder 5 at the next-update time T (inu). To confirm the storage completion of the decoded data Dd, that is, recording completion to the data storage 17, for example, end of the decoded data Dd is referred to. The procedure then goes to the next step S70.

In step S70, the next-update information Inu extracted by the next-update information extractor 7 from the decoded data Dd is stored in the next-update information recorder 9. To be specific, the next-update information Inu already recorded in the next-update information recorder 9 is updated, as is the next-update time T (inu), by the next-update information Inu currently newly-provided by the next-update information extractor 7. Note that, the newly-provided next-update information Inu stored in this step indicates when the decoded data Dd recorded in step S60 is to be updated next.

The procedure then returns to step S30. Thereafter, steps S30, S40, S50, S60, and S70 are repeated so that the decoded data Dd stored in the data storage 17 is updated by the newly-provided decoded data Dd for every next-update time T (inu), which is the time when the decoded data Dd is updated by the next-update information Inu.

Herein, although in step S60, the decoded data Dd already stored in the data storage 17 is updated by the newly-provided decoded data Dd, the newly-provided decoded data Dd may be stored, alternatively, together with the already-stored decoded data Dd. Similarly in step S70, instead of updating the already-stored next-updated information Inu by the newly-provided next-updated information Inu, the newly-provided next-updated information Inu may be stored together with the already-stored next-updated information Inu.

As is described in the foregoing, according to the storage-type data receiver Arp1 of this embodiment, only when the decoded data Dd provided by a single data source is updated, the decoded data Dd already stored in the data storage 17 is updated by the newly-provided decoded data Dd. In this manner, the frequency of data writing to the data storage 17 can be cut down to a minimum. To be specific, the data can remain the latest while the deterioration of the data storage 17 being suppressed.

### (Second Embodiment)

The structure of the data receiver according to the second embodiment of the present invention is described by referring to FIG. 2. Herein, this embodiment is suitable for an environment where data to be stored is distributed from one of a plurality of data sources at a given time.

In a storage-type data receiver Arp2 of this embodiment, a tuner controller 23 is additionally provided so as to connect the comparator 11 and the tuner 1 found in the storage-type data receiver Arp1 shown in FIG. 1. Further, a data reception processing program contained in the ROM 40B is slightly different from the one in the storage-type data receiver Arp1.

Based on the judgement signal Sj provided by the comparator, the tuner controller 23 provides the tuner 1 with a tuning channel signal St indicating a frequency band of a broadcast channel to tune among the received broadcast wave Srf. The tuner 1 outputs, in accordance with the tuning channel signal St, the video signal Sv obtained from the broadcast wave Srf of the predetermined channel to the data extractor 3.

Next, by referring to the flowchart shown in FIG. 5, it is described how the storage-type data receiver Arp2 of this embodiment is operated to receive and process data. Note that, the flowchart of this embodiment is additionally provided with step S4 before step S20 found in the flowchart of the first embodiment shown in FIG. 3, and step S54 between steps S50 and S60 thereof. Hereinafter, these additionally-provided steps S4 and S54 are more focused in the operational description next below.

Once the storage-type data receiver Arp2 is started, first of all,
in step S4, the user designates a desired channel for reception to the tuner controller 23. The tuner controller 23 records the user designated channel and also generates, for output to the tuner 1, the tuning channel signal St which indicates that the channel.

The tuner 1 tunes itself, in accordance with the tuning channel signal St. with the broadcast wave on the user designated channel. As a result, from the broadcast wave Srf received by the antenna, the tuner 1 obtains the video signal Sv being broadcast on the user's desired channel and outputs it to the data extractor 3.

Thereafter, processing in steps S10, S20, S30, S40, and S50 is executed right after the aforementioned storage-type data receiver Arp1 is started. In step S50, the comparator 11 outputs the determination signal Sj to both the storage controller 13 and the tuner controller 23 when the determination is Yes, meaning that, the current time reaches the next-update time T ( inu). Then, the procedure goes to the next step S54.

In step S54, a tuner control part 12 outputs the tuning channel signal St to the tuner 1 in response to the determination signal Sj. The tuner 1 is controlled by the tuning channel signal St in such a manner as to tune itself with the channel designated by the user in step S4. As a result, the decoded data Dd included in the video signal Sv distributed on the user desired broadcast channel is provided by the data decoder 5. Thereafter, steps S60, S70, S30, S40, and S50 in the foregoing are repeated to be ready for the next update of the data De.

As described in the foregoing, according to the storage-type data receiver Arp2 of this embodiment, only when the data distributed from one arbitrary data source out of the plural is updated, the tuner 1 is tuned with a broadcast channel corresponding to that arbitrary data source, and thus the decoded data Dd stored in the data storage 17 is updated to be the latest.

Consequently, there is no need to leave the tuner 1 on a channel continuously for data broadcasting, and also the frequency of writing to the data storage 17 can be cut down to a minimum. In this manner, the tuner 1 can be used for another data source except during the decoded data Dd being updated, and data can remain the latest with deterioration of the data storage 17 being suppressed.

### (Third Embodiment)

By referring to FIG. 6, the structure of the data receiver according to the third embodiment of the present invention is described. Herein, this embodiment is suitable, in an environment where data to be stored is distributed from one of plurally-provided data sources at a given time, for updating data in storage with a minimum power consumption.

A storage-type data receiver Arp3 of this embodiment is additionally provided with a power supply controller 25 between the comparator 11 and the power supply 21 found in the storage-type data receiver Arp2 shown in FIG. 4 to connect. Further, a data reception processing program contained in the ROM 40B is slightly different from the one in the storage-data receiver Arp3.

The power supply controller 25 generates a power control signal Sp which controls power supply from the power supply 21 to each constituent of the storage-type data receiver Arp3 in response to the determination signal Sj provided by the comparator 11. The power supply 21 varies its power supply to the constituents of the data receiver Arp3 according to the power supply control signal Sp.

Next, by referring to the flowchart in FIG. 7, it is described how the storage-type data receiver Arp3 of this embodiment is operated to receive and process data. Herein, the flowchart of this embodiment is additionally provided with step S22 before steps S20 and S30 found in the flowchart of the second embodiment shown in FIG. 5, and step S52 between steps S50 and S54 thereof. Note that, the procedure after step S70 goes not to step S30 but to newly-provided step S22. These additionally-provided steps S22 and S52 are more focused in the operational description next below.

Once the storage-type data receiver Arp3 is started, processing in steps S4, S10, and S20 in the aforementioned second embodiment is first carried out. To be specific, the decoded data Dd distributed on a user desired broadcast channel is stored, and the next-update information Inu which indicates when the decoded data Dd is to be updated next is also stored, and then the procedure goes to the next step S22.

In step S22, in response to the determination signal Sj provided by the comparator 11, the power supply controller 25 stops the power supply for any constituent of the storage-type data receiver Arp3 of this embodiment which is not necessary for next update of the decoded data Dd. In this example, the power supply to the constituents in charge of display typically including the tuner 1, the data extractor 3, and the tuner controller 23 is stopped. On the other hand, the power supply to the constituents in charge of control typically including the comparator 11, the clock 15, and the power supply controller 25 is kept on.

Thereafter, the processing in steps S30, S40, and S50 is carried out by the control constituents. Then, in step S50, when the determination is Yes, that is, when the current time reaches or coincides with the next-update time T (inu), the procedure goes to the next step S52.

In step S52, the power supply for the display constituents once stopped in step S22 is started again. Thereafter, processing in steps S54, S60, and S70 being handled by the display constituents is carried out. Then the procedure again returns to step S22, and the power supply for the display constituents is stopped.

In this manner, steps S22, S30, S40, S50, S52, S54, S60, and S70 are repeated to be ready for the update of the decoded data Dd.

As is described in the foregoing, according to the storage-type data receiver Arp3 of this embodiment, only when the data distributed from one arbitrary data source out of the plural is updated, the power is supplied to the distribution data source and the data storage part, and the tuner 1 is tuned to a channel corresponding to the desired data source, whereby the decoded data Dd is stored in the data storage 17.

As a result, the frequency of writing to the data storage 17 can be cut down to a minimum without constant power supply to any constituent necessary to receive data, and without continuously setting the tuner 1 to an channel to store data.

Accordingly, the power consumption is reduced, the tuner 1 can be used for another data source except during the data being updated, and the data can remain the latest with the deterioration of the data storage 17 being suppressed.

### (Fourth Embodiment)

By referring to FIG. 8, the structure of the data receiver according to the fourth embodiment of the present invention is described. Note that, this embodiment is suitable for, in an environment where data to be stored is each distributed from a plurality of data sources at a given time, updating data in storage with a minimum power consumption.

A storage-type data receiver Arp4 of this embodiment is additionally provided with a storage program extractor 27 and a storage program register 29 in the storage-type data receiver Arp3 shown in FIG. 6. Further, a data reception processing program contained in the ROM 40B is slightly different from the one in the storage-type data receiver Arp1.

The storage program extractor 27 connects the data decoder 5 to the next-update information extractor 7, and the storage program register 29 is connected to both the storage program extractor 27 and the tuner controller 23. Consequently, in this embodiment, an in-data processing controller 40R is structured by the storage program extractor 27 which is additionally provided to the aforementioned in-data processing controller 40.

The user operates the storage program register 29 so that program identification information Ip can be registered in the storage program extractor 27. Note that the program identification information is formed by various parameters each indicating broadcast programs whose decoded data Dd is favorably required to be stored. The program identification information Ip, typical of EPG, includes information such as program broadcast channel, program identification number, program start time and end time, and program details, and with other information, can be additionally provided as required. Further, the storage program register 29 outputs, to the tuner controller 23, broadcast channel information included in the program identification information Ip as the tuning channel signal St.

Next, by referring to the flowchart shown in FIG. 9, it is described how the storage-type data receiver Arp4 of this embodiment is operated to receive and process data. Note that, the flowchart of this embodiment is additionally provided with step S2 before step S4 in the flowchart of the third embodiment shown in FIG. 7, step S6 between steps S4 and S10, and step S56 between steps S54 and S60. Further, step S4 is replaced with step S4R. These additionally-provided steps S2, S4R, S6, and S56 are more focused in the operational description next below.

Once the storage-type data receiver Arp4 is started, first of all,
in step S2, the user the user operates the storage program register 29 so that the program identification information Ip indicating the broadcast programs whose decoded data Dd favorably required to be stored is registered in the storage program extractor 27. The procedure then goes to the next step S4.

In step S4R, the program identification information Ip registered in step S2, the tuner controller 23 outputs the tuning channel signal St which indicates the user designated channel to the tuner 1. Then, the procedure goes to the next step S6.

In step S6, it is determined whether or not the currently distributed program is the program designated in step S2. Herein, the details of the currently distributed program can be referred to the decoded data Dd provided by the date decoder 5. The determination becomes Yes when the desired program is distributed, and then the procedure goes to the next step S10.

After the processing in steps S10, S20, S22, S30, S40, S50, S52, and S54 is carried out, the procedure goes to the next step S56. In detail, the decoded data Dd on the user desired channel is stored (S60) and also the next-update information Inu is stored (S70), then the power supply to the display constituents is stopped (S22). Thereafter, when the current time reaches the next-update time T (Inu) (S50), the power supply to the display constituents is started again (S52) to be ready for storage of the latest distribution data of any desired program.

In step S56, the storage program extractor 27 determines, in a similar manner to the processing in step S6, whether or not the currently distributed program is the program designated in step S2. When the determination becomes Yes when the desired program is distributed, and the procedure goes to the next step S60. Thereafter, steps S60, S70, S22, S30, S40, and S50 is repeated to be ready for the next update of the data De.

As is described in the foregoing, according to the storage-type data receiver Arp4 of this embodiment, the power supply necessary to receive data is turned on only when to-be-stored data each distributed from a plurality of data sources at a given time is updated, and the tuner 1 is tuned to the corresponding channel, and then the data De is written to the data storage 17. As a result, the frequency of writing to the data storage 17 can be cut down to a minimum without continuous power supply to any constituent necessary to receive data, and without setting the tuner 1 to the corresponding channel to store data.

Accordingly, the power consumption is reduced, the tuner 1 can be used for another data source except during the data being updated, and further the data can remain the latest with the deterioration of the data storage 17 being suppressed.

Note that, in this embodiment, the recording medium for recording the data reception processing program is the ROM 40B. However, other semiconductor memory may be used as an alternative to the ROM 40B, or other recording medium such as floppy disk, hard disk, and CD-ROM will do. The recorded data reception processing program can be read by a reading device suitable for such recording medium, needless to say.

In the above-described embodiment, the data decoder 5, the next-update information extractor 7, the next-update information recorder 9, the comparator 11, and the storage controller 13 are structured to be implemented via software, the data decoder 5, the next-update information extractor 7, the next-update information recorder 9, the comparator 11, and the storage controller 13 may be partially or wholly structured to be implemented via hardware.

In the above-described embodiment, although the description is made for a case where the present invention is applied to the data receiver and the data reception method of a type receiving the broadcast-type service, the present invention can be applied to the data receiver, e.g., personal computer, and the data reception method of a type receiving the communication-type service such as the Internet.

### INDUSTRIAL APPLICABILITY

As is obvious from the above, the present invention can be applied to storage-type data reception in a data receiver which receives broad-cast type service, or a data receiver such as personal computer which receives communication-type service such as the Internet.

## Claims

1. A storage-type data receiver for receiving data being updated at irregular intervals and next-update information indicating when said data will be next updated, both distributed by a data source to store said data therein, said receiver comprising:
reception means for receiving said data and next-update information;
storage means for storing said data;
data update detection means for comparing current time and next-update time indicated by said next-update information to generate a data update time indication signal indicating whether it is the time to update said data, or not; and
data storage control means for controlling storage of said data in said storage means based on said data update indication signal.

2. A storage-type data receiver as claimed in claim 1, wherein said data storage control means controls said storage means to store said received data when the current time coincides with said next-update information.

3. A storage-type data receiver as claimed in claim 1, wherein said reception means further comprises:
tuner means for arbitrarily selecting a signal of broadcast channel among plural signals of broadcast channels; and
tuner control means for controlling channel selection by said tuner means based on said data update time indication signal.

4. A storage-type data receiver as claimed in claim 3, wherein said tuner control means controls said tuner means in such a manner as to tune itself with said arbitrarily selected channel when the current time coincides with said next-update information.

5. A storage-type data receiver as claimed in claim 1, further comprising power supply control means for controlling power supply to said reception means based on said said data update indication signal.

6. A storage-type data receiver as claimed in claim 5, wherein said power supply control means makes power supplied to said reception means only when the current time coincides with said next-update information.

7. A storage-type data receiver as claimed in claim 5, wherein said power supply control means makes power supplied to said data update detection means regardless of said said data update indication signal.

8. A storage-type data receiver as claimed in claim 3, wherein storage data identification information means for generating identification information for specifying said data to be stored,
based on said identification information, said tuner control means tunes the channel of said tuner means to a broadcast channel through which said stored data is distributed.

9. A storage-type data receiver as claimed in claim 8, further comprising specified data extraction means for extracting said specified data to be stored from said received data based on said identification information.

10. A storage-type data reception method for receiving data being updated at irregular intervals and next-update information indicating when said data will be next updated, both distributed by a data source to store said data therein, said method comprising:
a reception step of receiving said data and next-update information;
a storage step of storing said data;
an update time determination step of determining whether it is the time to update said data after comparing current time and next-update time indicated by said next-update information, or not; and
a data storage control step of effectuating said storage step based on the determination made in said update time determination step.

11. A storage-type data reception method as claimed in claim 10, wherein, in said data storage control step, said storage step is effectuated only when the current time coincides with said next-update information.

12. A storage-type data reception method as claimed in claim 10, wherein said reception step further comprises:
a tuning step of arbitrarily selecting a signal of broadcast channel among plural signals of broadcast channels; and
a tuning control step of effectuating said tuning step only when the current time coincides with said next-update information.

13. A computer program capable of activating a computer in such a manner that a device structured by the computer program and the computer can carry out the storage-type data reception method as claimed in claim 10.

14. A computer program capable of causing a computer to carry out the storage-type data reception method as claimed in claim 10 when the product is run thereon.

15. A computer program product stored on a medium readable by a computer, which comprises computer code means capable of carrying out the storage-type data reception method as claimed in claim 10 when the product is run thereon.
